# EUROPEAN PATENT APPLICATION

(11) **EP 2 889 812 A1**
(43) Date of publication of application: **01.07.2015**
(21) Application number: 13199582.1
(22) Date of filing: 24.12.2013
(51) Int. Cl.: G06Q 10/00, G07C 9/00

(54) **Room access control system**

(71) Applicant: Pathway IP SARL, 2449 Luxembourg (LU)
(72) Inventor: Sharpe, Andre, 1297 Switzerland (CH); Mitchell, James, 1270 Switzerland (CH); Heeger, Christopher, 1260 Switzerland (CH); Lemmer, Cornelis, South Africa 1735 (ZA); Englebrecht, Jacque, South Africa 2021 (ZA)
(74) Representative: Sadler, Peter Frederick

(57) **Abstract**

A system for controlling user access to a room, the system comprising a database (1206) for associating users with predetermined periods of time and a local user device (1201) mounted proximate to the room and electronically coupled to a lock mechanism of a door to the room. The system is configured to determine using the database, in response to first user input provided to the local device, that the room is scheduled for use by that user, to unlock the door to the room based on the determination and to lock the door after the scheduled period has elapsed. The system is further configured to display, via the local device, available periods of time during which the room is available for use, receive, at the local device, a selection from a local user to select an available period of time to use the room, and associate, in the database, the local user with the predetermined period of time based on the selection.

## Description

### TECHNICAL FIELD

Embodiments of the invention relate to systems and methods for automating access to rooms, and particularly to rooms providing office resources or workspace.

### BACKGROUND

Modern demands on time require workers to be constantly available and able to access office equipment or meeting rooms at any time in any location. The nature of mobile working requires flexible workspaces that can be accessed at many different locations such as airports, hotels, transport hubs and so on.

It would be desirable to be able to allow multiple different users to automatically access rooms providing office resources and/or flexible workspaces.

### SUMMARY OF INVENTION

The invention is defined in the claims to which reference is now directed. Preferred features are set out in the dependent claims.

According to a first aspect there is provided a system for controlling user access to one or more rooms, such as office or meeting rooms. The system comprises one or more local user devices which are each mounted proximate to, and associated with, respective rooms which make up a local set of rooms. Each local user device is electronically coupled to a lock mechanism of a door to its associated room. The system further comprises a remote server coupled to a first database that associates users, using user IDs for example, with booking information for each room in a global set of rooms. The local set of rooms is a subset of this global set of rooms. The system also further comprises a local master device coupled to a second database that associates users, again using user IDs for example, with booking information for each room in the local set of rooms, the local master device being configured to communicate with the remote server to update the second database from the first database. Each local user device is configured to, in response to user input, communicate with the local master device to determine, using the second database, whether the associated room is scheduled for use by a user and to unlock the door to the associated room based on the determination if the room is scheduled for use by that user. The local user devices are further configured to receive a selection from a local user to select an available period of time to use the associated room and communicate with the remote server to associate, in the first database, the local user with the predetermined period of time based on the selection. Because the local master device maintains a local database, global traffic to the remote server is reduced. At the same time, the local database is updated from the remote database, which receives booking information directly from the slave devices, allowing an improved way of adding room booking data to the system without requiring additional manual configuration of the master device.

Each of the local user devices may be configured to send identification data to the local master device and to the remote server, and the local master device may be configured to maintain a list of data, such as a directory or table, identifying each of the local user devices associated with it. The identification data allows the local master device to determine whether a given local user device has booking details stored in the local database and to keep track of the local user devices for which it should be requesting booking information from the remote server using the list. The local master device may be further configured to determine whether the identification data of a given local device with which it is communicating corresponds to an entry in the list of data and if the identification of the given local device with which it is communicating does not correspond to an entry in the list of data the local master device is further configured to query the first database to determine that the associated room is scheduled for use by that user. This allows the local master device to retrieve information for rooms/local user devices that are not currently featured on the local list. If the first database indicates that the associated room is scheduled for use by that user, the local master device may be further configured to update the list of data identifying each of the local user devices to include an entry for the given local user device. This allows for dynamic updating of the rooms associated with the master device, such that from the point of update it will fetch booking information from the server relevant to a new room. The local master device may therefore be configured to update the second database from the first database by requesting data for local user devices identified in the list of data maintained by the local master device.

A corresponding method for controlling user access to one or more rooms may be provided, along with a corresponding local user device, a corresponding local master device and a corresponding remote server.

The corresponding method for controlling user access to one or more rooms may comprise: receiving user input at a local user device, being one of a plurality of local user devices each mounted proximate to, and associated with, a respective room from a plurality of rooms making up a local set of rooms, each local user device being electronically coupled to a lock mechanism of a door to the associated room; sending a request from the local user device to a local master device based on the user input to determine, using a local database, that the associated room is scheduled for use by a user; and unlocking the door to the associated room based on the determination. The method may further comprise: receiving, at the local user device, a selection from a local user to select an available period of time to use the associated room; and sending data from the local user device to a remote server to associate, in a remote database, the local user with the predetermined period of time based on the selection; wherein the local master device is configured to communicate with the remote server to update the local database from the remote database.

The corresponding local user device may be mounted proximate to, and associated with, a room being one of a local set of rooms, the local user device being electronically coupled to a lock mechanism of a door to the associated room. The local user device is configured to: communicate with a remote server coupled to a first database that associates users with predetermined periods of time for each room in a global set of rooms, the local set of rooms being a subset of the global set of rooms; communicate with a local master device coupled to a second database that associates users with predetermined periods of time for each room in the local set of rooms, the local master device being configured to communicate with the remote server to update the second database from the first database; in response to user input, communicate with the local master device to determine, using the second database, that the associated room is scheduled for use by a user; and unlock the door to the associated room based on the determination. The local user device is further configured to: receive a selection from a local user to select an available period of time to use the associated room; and communicate with the remote server to associate, in the first database, the local user with the predetermined period of time based on the selection.

The corresponding local master device is coupled to a local database that associates users with predetermined periods of time for each room in a local set of rooms. The local master device is configured to: receive a request from a local user device to determine, using the local database, that a room associated with the local user device is scheduled for use by a user and send the result of the determination to the local user device to unlock a door to the associated room based on the determination; and communicate with a remote server to update the local database from a remote database that associates users with predetermined periods of time for each room in a global set of rooms, the local set of rooms being a subset of the global set of rooms. The remote database is updated to associate users with predetermined periods of time by receiving data from the local user device based on a selection from a local user to select an available period of time to use the room associated with the local user device.

The corresponding remote server is coupled to a remote database that associates users with predetermined periods of time for each room in a global set of rooms, The remote server is configured to: receive requests from respective local master devices to update a local database, the local database associating users with predetermined periods of time for each room in a local set of rooms local to the respective local master device, and send data to the local master device in response to the requests; receive data from local user devices, each associated with a respective room in a local set of rooms, based on a selection from a local user to select an available period of time to use the room associated with the local user device, and updating the remote database in response.

According to a second aspect there is provided a system for controlling user access to a room. The system comprises a database for associating users with predetermined periods of time and a local user device mounted proximate to the room and electronically coupled to a lock mechanism of a door to the room. The system is configured to: determine using the database, in response to first user input provided to the local device, that the room is scheduled for use by that user; unlock the door to the room based on the determination; and lock the door after the scheduled period has elapsed. The system is further configured to: display, via the local device, available periods of time during which the room is available for use; receive, at the local device, a selection from a local user to select an available period of time to use the room; and associate, in the database, the local user with the predetermined period of time based on the selection.

The system may further comprise a remote server configured to: communicate with the local user device over a network; send data, via a network, to a remote client device in response to a request from the remote client device, the data indicating available periods of time during which the room is available for use; receive from the remote client device, via a network, a selection from a remote user to schedule an available period of time to use the room; and associate, in the database, the remote user with a predetermined period of time based on the selection. The system may be further configured to: determine when a local or remote user has provided a selection to select a first available period of time to use the room; and prevent a remote or local user from selecting the first available period of time for a predetermined period of time.

The system may be further configured to: determine, in response to second user input provided to the local device, when a user has finished using the room; lock the door to the room based on the determination; and update the database to indicate that the user has finished using the room. The system may be further configured to: compare the time at which first user input is provided to the local device with the start time at which the room is scheduled for use; determine that the first user input has been provided within a predetermined period of time prior to the start time at which the room is scheduled for use; determine whether the room is currently scheduled for use by another user; and where the room is currently not scheduled for use by another user, unlock the door to the room. Optionally, where the room is currently scheduled for use by another user, the system may be further configured to determine whether that user has finished using the room by querying the database and, if so, unlocking the door to the room.

Alternatively, or in addition, the system may be further configured to: compare the time at which the first user input is provided to the local device with the time during which the room is scheduled for use; determine that the first user input has been provided within the time during which the room is scheduled for use; determine whether a previous user has finished using the room by querying the database; and where the previous user has finished using the room, unlock the door to the room. Optionally, where the previous user has not finished using the room, the system is further configured to: unlock the door to the room; and automatically update the database to indicate that the previous user has finished using the room.

The system may be further configured to: receive third user input provided to the local device requesting an extension to a period of time for which a user is scheduled to use the room; determine whether any previous extensions have been requested to the period of time for which the user is scheduled to use the room; and when no previous extensions have been requested, or the previous extensions are less than a predetermined maximum extension period, update the database to indicate that the period of time for which the user is scheduled to use the room has been extended; when previous extensions have been requested above the predetermined maximum extension period, automatically update the database to indicate that the user has finished using the room and lock the door to the room.

The system may require a user to be registered to use the system, in which case the system may be further configured to: receive user identification input identifying the user; determine that the user is not registered to use the system; and register the user by requesting user details and payment details at the local user device.

The local device may be configured to display a visual indicator indicative of the current status of the room. The local device may be configured to perform one or more of: display a first indicator when the room is available for use; display a second different indicator when the room is scheduled for use; display a third different indicator to indicate that the room is currently in use.

The door to the room may be accessible by a second room, such as a lounge area, having a second door. The system may further comprise a second local user device mounted proximate to, and outside of, the second room and electronically coupled to a lock mechanism of the second door, the system being configured to: determine using the database, in response to fourth user input provided to the second local device, that the user is registered to use the system; unlock the door to the second room based on the determination to allow the user into the second room; update the database to indicate that the user has entered the second room. The system may also be further configured to record charging information for the user in the database. Alternatively the system may be configured to: determine using the database, in response to fourth user input provided to the second local device, that the user is registered to use the system; unlock the door to the second room based on the determination to allow the user into the second room; and update the database to indicate that the user has entered the second room. The system may further comprise a third local user device mounted proximate to, and inside of, the second room, the system being configured to: determine, in response to fifth user input provided to the third local device, that the user desires to leave the second room; update the database to indicate that the user has left the second room; and optionally record charging information for the user in the database.

It is possible that the user may enter the lounge without being logged in. Optionally, contained within the second room, may be one or more facilities or devices for use by the users, the facilities being in communication with the second local user device. When the user provides user input to any of the facilities in order to use them the system may be configured to perform a check to determine whether the database has been updated to indicate that the user has entered the second room. If so, then no further action is required, but if the user has not yet been logged into the second room, the system is configured to update database accordingly. The system may optionally be further configured to perform a periodic check to determine whether or not the user has left the second room, and if they have not, a further check is performed to determine whether or not the user has made use of one or more of the facilities within the second room. The system may be configured to perform the checks whereby if a transaction has not been made within a predetermined period using one or more of the facilities then the system will update the database to indicate that the user has checked out. If a transaction has been made then the system will not check the user out, and may repeat the checks after a predetermined period of time.

The local user device may be an integral device comprising a touch-screen display, a network connection and a door lock mechanism interface.

The system may further comprise a plurality of additional local user devices mounted proximate to, and associated with, respective ones of a plurality of additional rooms, each additional local user device being electronically coupled to a lock mechanism of a door to the associated room. The system is configured to determine, using the database, in response to first user input provided to a given local device, that the associated room is scheduled for use by that user, to unlock the door to the associated room based on the determination and to lock the door after the scheduled period has elapsed. The system is further configured to display, via the given local device, available periods of time during which the associated room is available for use, receive, at the given local device, a selection from a local user to select an available period of time to use the associated room and associate, in the database, the local user with the predetermined period of time based on the selection. The system may further comprise a remote server that maintains a first database, being a remote database, the local user devices being configured to communicate with the remote server to update the first database in response to a selection from a local user to select an available period of time to use the associated room. The system may further comprise a local master device configured to communicate with the local user devices and to maintain a second database, being a local database, that associates users with predetermined periods of time for each room, the local master device being configured to communicate with the remote server to update the second database from the first database. Each local user device may be further configured to receive a selection from a local user to select an available period of time to use the associated room and communicate with the remote server to associate, in the first database, the local user with the predetermined period of time based on the selection,

Each of the local user devices may be configured to send identification data to the local master device and to the remote server. The local master device may be configured to maintain a list of data identifying each of the local user devices and determine whether the identification data of a given local device with which it is communicating corresponds to an entry in the list of data. The local master device may be further configured to query the first database to determine that the associated room is scheduled for use by that user in the event that the identification of the given local device with which it is communicating does not correspond to an entry in the list of data. The local master device may be further configured to update the list of data identifying each of the local user devices to include an entry for the given local user device in the event that the first database indicates that the associated room is scheduled for use by that user, Tthe local master device may be further configured to update the second database from the first database by requesting data for local user devices identified in the list of data maintained by the local master device.

Embodiments of the second aspect may further include a method for controlling user access to a room. The method comprises receiving user input at a local device mounted proximate to the room and determining, using a database associating users with predetermined periods of time, in response to the user input, that the room is scheduled for use by that user. Based on the determination the door is unlocked if the user is authorised to use the room and is locked again after the scheduled period has elapsed. The method further comprises displaying, via the local device, available periods of time during which the room is available for use, receiving, at the local device, a selection from a local user to select an available period of time to use the room and sending data to associate, in the database, the local user with the predetermined period of time based on the selection.

The method may further comprise requesting data from a remote server, via a network, by a remote client device, the data indicating available periods of time during which the room is available for use, sending from the remote client device to the remote server, via a network, a selection from a remote user to schedule an available period of time to use the room and associating, in the database, the remote user with a predetermined period of time based on the selection.

Embodiments of the second aspect may further include a local user device that is mountable proximate to a room and electronically coupleable to a lock mechanism of a door to the room, the device being configured to receive user input identifying the user query a database to determine that the room is scheduled for use by that user, unlock the door to the room based on the determination and lock the door after the scheduled period has elapsed. The device is further configured to display available periods of time during which the room is available for use, receive a selection from a local user to select an available period of time to use the room and associate, in the database, the local user with the predetermined period of time based on the selection.

Embodiments of the second aspect may further include a remote server coupled to a database for associating users with predetermined periods of time. The remote server is configured to communicate with a plurality of local user devices over a network, the local user devices being mounted proximate to respective rooms and electronically coupled to a lock mechanism of a door to their respective rooms, to receive, from a given local user device, a selection from a local user to select an available period of time to use the room and to associate, in the database, the local user with the predetermined period of time based on the selection.

Any elements or functionalities of the first aspect may be combined with any elements of the second aspect.

### BRIEF DESCRIPTION OF THE FIGURES

Embodiments of the invention will now be described with reference to the accompanying figures in which:
Figure 1 is an example of an arrangement of rooms to which embodiments of the invention may be applied;
Figure 2 is a diagram of a system according to an embodiment of the invention;
Figure 3 is a flow diagram showing an example of the logic that may be used when checking a user into a room;
Figure 4 is a flow diagram showing an example of the logic that may be used when checking a user out of a room;
Figure 5 is a flow diagram showing an example of the logic that may be used when a user logs into a lounge area;
Figure 6 is a flow diagram showing an example of the logic that may be used when a user exits a lounge area;
Figure 7 is an example display that may be presented to a user by a local device;
Figure 8 is a diagram showing the functional units that may be included in a local user device;
Figure 9 is an image showing an example user device, including the components that make up the user device;
Figure 10 is an example wiring diagram for a local device mounted on a door to a room such as a meeting room;
Figure 11 is an example wiring diagram for local user devices for rooms that require an entrance and exit device such as a lounge area;
Figure 12 is a diagram of a system according to an embodiment of the invention;
Figure 13A is a flow diagram showing an example of a method for logging users into a lounge area;
Figure 13B is a flow diagram showing an example of a method for creating a booking in a room;
Figure 14 is a flow diagram showing an example of a method for logging users into a meeting room;
Figure 15 is a flow diagram showing an example of a method for synchronising data between a local master device and a remote server;
Figure 16 is a flow diagram showing an example of a method for checking a user out of a lounge area; and
Figure 17 is a flow diagram showing an example of the logic from Figure 4 in further detail.

### DETAILED DESCRIPTION OF PREFERRED EMBODIMENTS

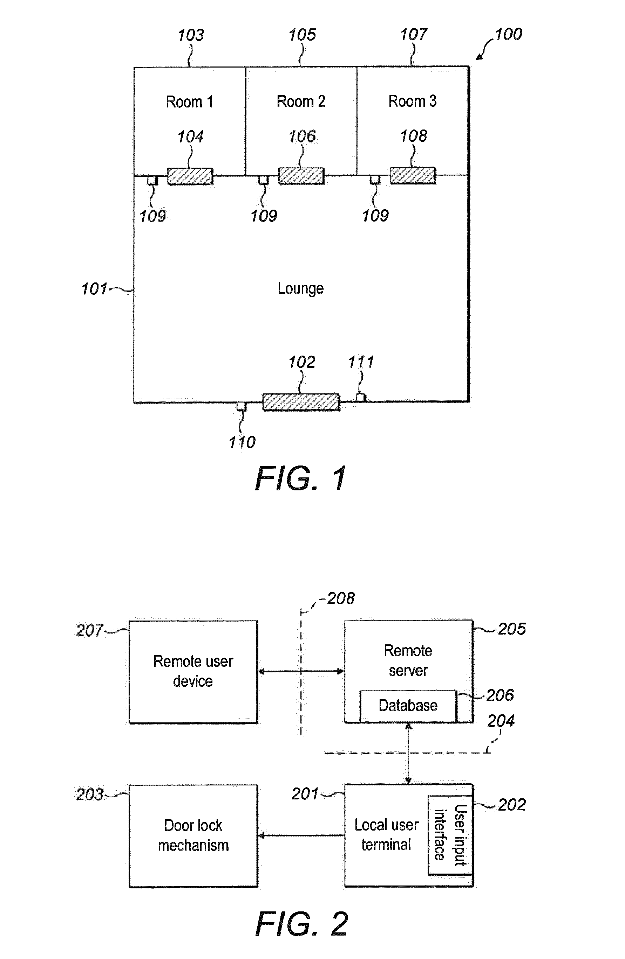

Figure 1 shows an example arrangement of rooms 100 with which embodiments of the invention may be used. An optional initial access room 101, referred to as a lounge, is provided, having an entrance / exit door 102. One or more rooms are accessible via the lounge, and in the example of Figure 1 three rooms are shown, 103, 105 and 107, each with their own respective entrance / exit door, 104, 106 and 108. The rooms 103, 105 and 107 may for example provide office working equipment or space in which to hold a meeting. The rooms are to be accessed by a number of different users over a period of time.

Access to one of the rooms 103, 105, 107 is controlled by a local user device 109, which may for example be a local panel, terminal or dumb terminal, associated with a particular room and mounted proximate to the door to the room. The local user device, or another device within the system as described below, determines whether a particular user is scheduled to use the particular room with which it is associated, and if so permits the user access to the room by unlocking the door. The device may also lock the door once the user's scheduled time has finished.

The local user device 109 comprises, is coupled to, or is associated with a display which is used to display periods of time for which the associated room is available for use (i.e. un-booked periods of time). Using the local user device, the user can provide input to select and book an available period of time during which they would like to use the room.

The lounge, 101, which is an optional feature, may be provided with office equipment, facilities and/or refreshments that users can use when they are waiting for the rooms 103, 105, 107 to become available. The lounge may have associated with it a local user device 110 which is mounted proximate to the door 102, outside the lounge. The local user device 110 determines whether a particular user is registered with the system to use the facilities of the lounge and/or the rooms 103, 105 and 107. If a user is registered then the device 110 will unlock the door 102 for the user when they identify themselves by providing input to the device. An additional local user device 111 may optionally be provided, mounted proximate to the door 111, or to a different door if multiple entrances and exits are provided, on the inside of the lounge. The additional local user device 111 may receive user input indicating that the user has left the lounge and update a record system or database accordingly.

Embodiments of the invention may be applied to a room arrangement such as that shown in Figure 1, although a single room, such as room 103, without the lounge, may be all that is required in some embodiments. The door locks for each of the rooms may be of the type that prevent a user from entering the room, when locked, but permit a user to exit the room at any time. This prevents users from getting stuck in rooms, and allows them exit in an emergency for example.

Figure 2 shows a system according to an embodiment of the invention. A local user device 201 is provided, and may be a local user device of the sort 109 shown in Figure 1. The device 201 includes a user input interface 202 for receiving user input, and is electrically connected to a door lock mechanism 203. The device is configured to send signals to the door lock mechanism to cause it to unlock the door with which the device is associated. The device is further configured to communicate with a remote server 205 over a network 204 such as the internet.

The remote server 205 maintains a database 206, which may be stored in memory within, or accessible by, the remote server. The database 206 stores associations between users and periods of time for which the user has booked a given room to use. The remote server may comprise one or more server units and/or be implemented as a cloud based distributed or virtual server, or any other suitable server arrangement. The remote server is configured to communicate with remote user devices such as device 207 via a network 208, which may be the same network as network 204.

The local user device 201 is used to perform two key functionalities, admitting users into a room at their allotted time and allowing a user to book time within the room either at a current time, if the room is currently vacant, or in the future.

The user approaches the user device 201 at or near their allotted or scheduled time and identifies himself/herself to the user device by providing identifying user input. This may be in the form of a user password, booking reference or ID number, or by presenting an RFID card or swipe card, which can be read by the user device. The system then determines whether the user has a slot scheduled for or near to the current time by querying the database 206. The local user device may contain logic to allow it to query the database or it may send the user input on to the server which performs the task. If the user has booked the current time slot then the system checks them in by updating the database 206 to indicate that they are using the room. The local user device then sends a signal to the door lock mechanism 203 causing the door to the room to unlock so that the user can enter the room.

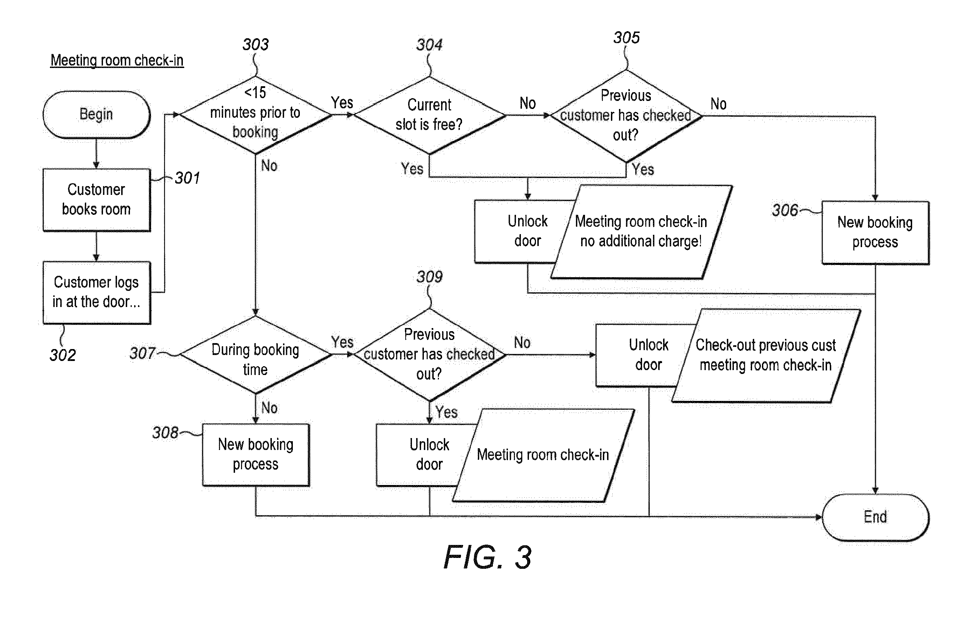

Figure 3 shows a flow diagram giving an example of the logic that may be used to determine if and when a new user can access a room. A booking 301 is made prior to the new user attempting to check into the room by associating the new user with a particular slot or period of time for the room in question. At step 302, the user identifies himself/herself to the system by entering user information at the device associated with the room. The system then determines whether the user should be allowed access to the room or not. These determinations/calculations may be performed at the device, at the remote server, or between the two, or, as with all calculations of this type described herein, may be performed by, or using data obtained from, a master device as will be described below.

At step 303, it is determined whether the new user is attempting to access the room within a predetermined period of time prior to their booking commencing. Figure 3 uses the example period of 15 minutes, but other suitable periods are possible. If the user is attempting to check in within 15 minutes of their slot commencing, then a determination is made at step 304 as to whether the current slot, or current period of time, is available for use. If the current period of time is available for use, because no booking has been made for the current period of time, then the door to the room is unlocked such that the user may access the room. If the current period of time is not available for use, because a prior booking has been made, then a further determination 305 is made to determine if the current user, who booked the present period of time, has already checked out of the room and/or never checked into the room. If the current user has checked out, and/or never checked in, then the door to the room is unlocked such that the new user may access the room. If the current user is still using the room then the new user may optionally be instructed to wait until the current user has finished, or optionally may be presented with a new booking process 306 to adjust their booking time.

If at step 303 it is determined that the new user has not arrived within the predetermined period of time prior to their booking commencing then a further determination is made. At step 307, the system determines if the new user has arrived during their booked period of time. If they have not arrived during their booked period of time, then they are either too early or too late for their slot and the door will not be unlocked. They may, optionally, however be presented with a new booking process 308 to change their booking or to book an additional period of time if available. Alternatively, if the new user has attempted to check in within their booked period of time then the door to the room is unlocked. This unlocking may be preceded or accompanied by a further determination 308 as to whether the previous customer (i.e., the customer with the slot immediately prior to the new customer's slot) has checked out from or exited the room. If the previous customer has checked out then the door is unlocked and the new customer is checked in by updating the database. If the previous customer has not checked out then the door is unlocked, the previous customer is automatically checked out, by updating the database, and the new customer is checked in.

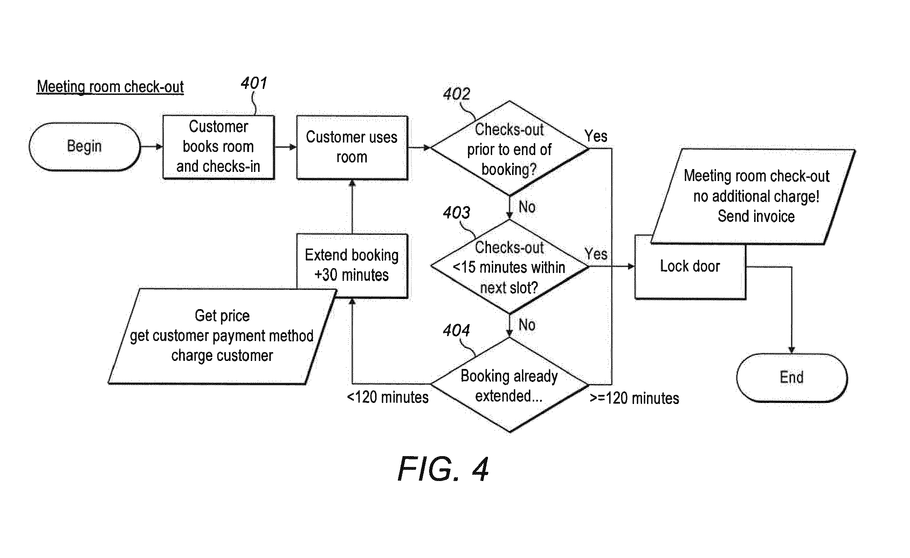

Figure 4 shows a flow diagram giving an example of the logic that may be used to determine when a current user should be checked out of a room. A booking is made in one of the manners described herein at step 401 and the customer checks in and uses the room, again according to one of the manners described herein. When the user checks out, which is achieved by providing user input to the device associated with the room, a determination is made at step 402. It is determined at step 402 whether the user is checking out prior to the end of the period for which they have booked the room. If the user is checking out prior to the end of the period for which they have booked the room, the door is locked and no additional action need be taken. If the user is not checking out prior to the end of their booking, a determination is made at step 403 as to whether the user is checking out within a predetermined period after the end of the period that they have booked. Figure 4 uses the example period of 15 minutes, but other suitable periods are possible. If the user is attempting to check out within the 15 minutes following the end of their booked period, optionally the user can be checked out and the door locked without any further action being taken. Optionally, extensions of time may be available, and so an additional determination, at step 404, may be made as to whether the booked period for that user has already been extended. Extensions may be made automatically, where the user is overrunning on their booked time, or may require a user prompt at the room device. A maximum period for extensions may be set, with Figure 4 showing the example of a maximum 120 minute extension, although it will be appreciated that other periods of time are possible. If the booking has not yet been extended, or has been extended for less than the maximum extension time, the booking period for the room may be extended. This extension period may optionally be a predetermined period of time. For example, the booking may be extended by 15 or 30 minutes each time, up to a maximum of 120 minutes, although other periods are possible. The user may be automatically charged for the extension or extensions. If extensions have already been used, and these have reached or exceeded the upper extension limit, the user is checked out and the door to the room is locked. The process of checking to determine whether a booking has overrun, and automatically extending the booking may be performed periodically, such as every 1 minute, or using any other set of intervals. Automatic extensions may be capped at a maximum extension period as described above, whereas manual requests to extend a period may not be restricted to a maximum period.

As has been mentioned above, it is possible for an intermediate room, or lounge, to be provided through which users need to pass to access the room 103 and the associated local device. The lounge has associated with it the check in entrance device 110 and check out exit device 111. The lounge may contain additional resources or facilities beyond the rooms 103, 105, 107 that a user may wish to access such as printing devices, fax machines and so on.

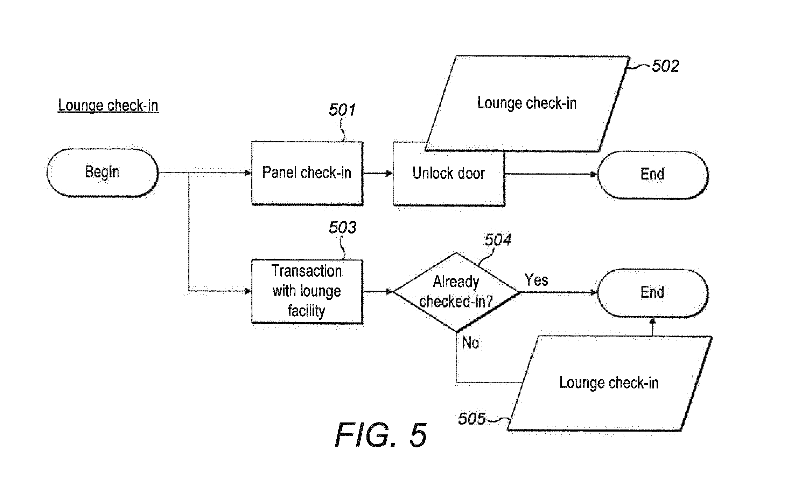

Figure 5 shows an example optional procedure for checking a user into the lounge area, which includes updating the database to indicate that the user is in the lounge. Typically a user will check in 501 by swiping their card, or otherwise providing identification data, to a local device associated with the lounge, such as device 110 in Figure 1. The system will check the user in 502, updating the database accordingly, including optionally updating billing information associated with a user's account, and unlock the door so that the user can enter the lounge.

It is possible that the user may enter the lounge without having swiped in. This is likely where more than one person enters the lounge at the same time. Optionally, embodiments may also allow check-in of such "tailgaters". Contained within the lounge may be one or more facilities or devices for use by the lounge users, the facilities being attached to a network and in communication with the lounge panel, the database or both. These facilities require the user to swipe their ID card, or provide some other form of identification data, in order to use them. The facilities may include photocopiers, printers, coffee machines, fax machines, computers, or local devices used for booking meeting rooms, such as panels 109 in Figure 1.

When the user makes use of a facility within the lounge area 503 the lounge panel or a central server may optionally perform a check 504 to determine whether the user has already been checked into the lounge. If so, then no further action is required, but if the user has not yet been checked into the lounge, the user is checked in 505 and the central database is updated accordingly.

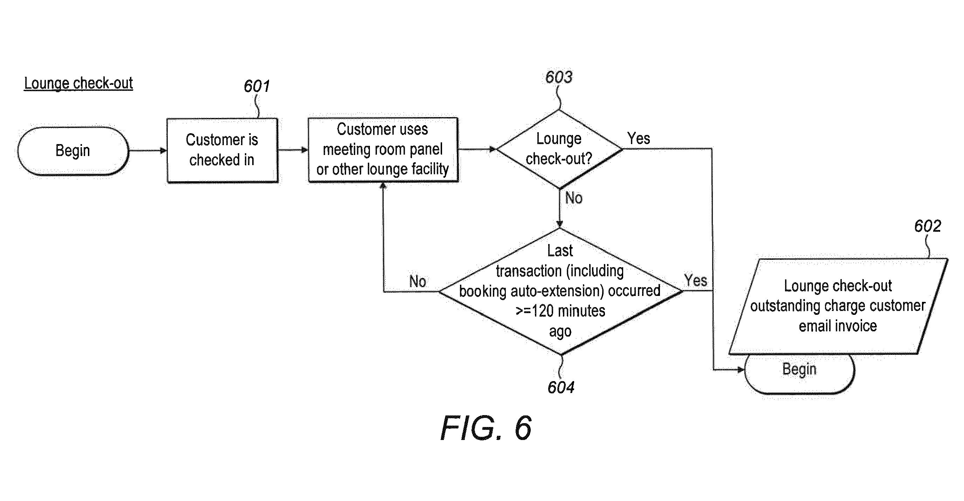

Figure 6 shows an example of the logic that may be employed when a user checks out of, or leaves, the lounge using similar principles to that discussed in relation to Figure 5. The process starts at a point when the user is checked into a lounge environment, at step 601. Typically, the user will check out by swiping their card, or otherwise providing identification data, to a local device associated with the lounge, such as device 111 in Figure 1. The system will check the user out 602, updating the database accordingly, and may update the database further with billing information charging for the lounge use. However, it is possible that the user may exit the lounge without having swiped out.

The system may optionally be configured to perform a periodic check 603 to determine whether or not the user has checked out, and if they have not a check 604 is performed to determine whether or not the user has made use of one or more of the facilities within the lounge area. The checks may be performed by the lounge panel 111, central server or another component as described herein such as a master device. If a transaction has not been made within a predetermined period, such as 120 minutes, then the system may update the database to indicate that the user has checked out, including updating charging information if necessary. If a transaction has been made then the system may not check the user out, and will repeat the checks after a predetermined period of time. In other embodiments, the only manner in which a user may be checked out of the lounge may be to check out manually such as by providing user identification information at a lounge exit panel. Alternatively, or in addition, users may be automatically checked out at a predetermined time of day, such as at 12am, or after a predetermined period of time from check-in.

Referring to Figure 2, again it can be seen that the local user device 201 may include a user input interface 202. This can be used to initiate booking of a period of time in the room with which the device is associated. The user input interface may include one or more of a touch screen panel, a keyboard, an RFID reader, a swipe card reader or any other suitable user input device. In order to initiate a booking, the user selects a period of time using the input interface after having provided user identification to the local user device. The device can display the available slots or time periods, as well as optionally displaying periods of time that are already booked by other users. The user may then provide a selection of a time period that they wish to book, causing the device to optionally display pricing information relating to the user's selection. Once the user has selected their desired time period, confirmation may be required, based on user input, which may also require payment to be received such as via credit card. The input received by the local user device can be used to update the database 206, which stores associations between users, rooms and time periods for which a user has booked a given room. Updates may only occur after confirmation of the booking has been received and may also require payment to have been made.

In addition to allowing users to book time in a room directly via the device associated with the room, it is also possible to book time using a remote user device 207 over network 208. The remote user device 207 may be a computer, laptop, tablet, PDA, mobile phone, or smart phone, for example that is able to interface with the remote server 205 via a network such as the internet. The remote user device may interface with the remote server via an intermediate server, and may do so using an interface application such as a webpage configured to allow bookings to be made. The interface application may present to the user available time slots for rooms, allowing the user to select a time period and a room to book. Once the user has selected a room and/or a time period the interface application may optionally present pricing information and/or request confirmation of the booking as with the local device. The database 206 may only be updated once confirmation of the booking has been received.

Since the system allows bookings to be made either locally at the room device or remotely such as via the internet, it is possible that conflicting bookings may occur. The local devices may pull information periodically from the database or upon activation by the user, for example, and so the user device may not be able to display to a local user the most up to date booking information when a remote user has recently selected or booked a given time slot (and vice versa). To address this issue it is optionally possible that the system is configured such that a remote user is prevented from selecting a period of time for booking when that same period of time has already been selected (but not yet confirmed or paid for) by a local user. Similarly, a local user may be prevented from selecting a period of time for booking when that same period of time has already been selected (but not yet confirmed or paid for) by a remote user.

This "lock-out" period is possible because the system can be optionally configured such that the central database 206 must first be accessed before a time period can be booked, regardless of the method of booking. Therefore, a time period can be prevented from being booked by updating the database to show a time period as no longer being available when a user has selected, but not yet confirmed (and/or paid for) the time period. The lock-out period can apply for a predetermined period of time, such as 20 minutes, after which the time period that has been selected is marked once again as being available in the database 206 and so will show as being available again at the local devices and remote devices.

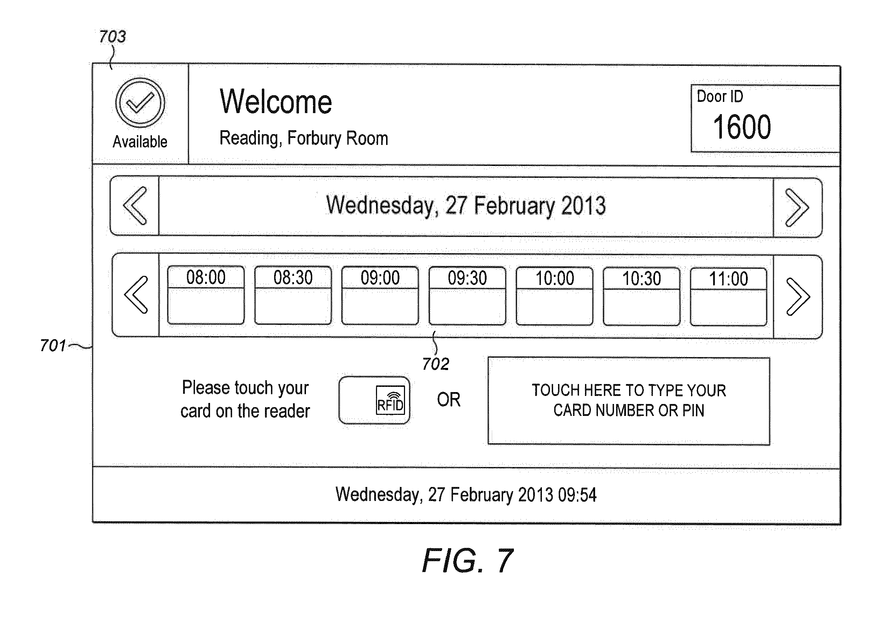

Figure 7 is an example of a screen display which may be provided to the user at a local user device. As can be seen, the display 701 shows a plurality of time slots 702 during which the room in question may be used. The time slots may be coloured a first colour to indicate that they are available for booking and a second colour to indicate that they are not available. The user first identifies himself/herself at the user device, such as by touching an RFID card on or near the RFID reader, or entering user identification information such as a user card number or PIN. The system may then determine whether the user has a period of time already booked, and therefore commence the check in procedure, or permit the user to book a period of time to use the room. Selection of a time period may be achieved using the touch screen functionality. Once a user has checked in to use a room the panel may present the user with the option of locking the door such that other users cannot enter the room from the outside. Bookings can be made in real time by accessing and modifying the database maintained by the remote server system. The user may also modify bookings, extend bookings, or cancel bookings using the local user device, which will cause the central database to be updated accordingly.

Included on the display is an optional status indicator 703. The status indicator indicates to a user at a glance whether the meeting room associated with the user device is available for immediate use, whether the meeting room is about to become occupied, or whether the meeting room is in use. The indicator 703 may use colours to indicate this, such as green to indicate that the room is available for immediate use, yellow to indicate that the meeting is about to become occupied due to a booking, and red to indicate that the room is being used. Other indicators or colours may be used. As well as, or alternatively to, indicating that a room is about to become used, the yellow indicator may be used to show that a room is currently booked, but has not been checked into by a user. Therefore, an indicator on the display associated with the local device may be used to indicate the occupancy or availability of the room.

Whenever a user identifies themselves or attempts to use a device, including a lounge entrance device 110, a check may optionally be performed to determine if that user is registered to use the system. If the user is not registered then a registration process may commence, during which the user's personal details, including contact details and billing information, can be requested in order to create an account for that user that can then be used to identify the user, allowing them to be associated with a particular time slot in the database 206. Associated with the user is payment information, which allows payment to be deducted for using the room, or to allow invoices to be generated and sent to the user.

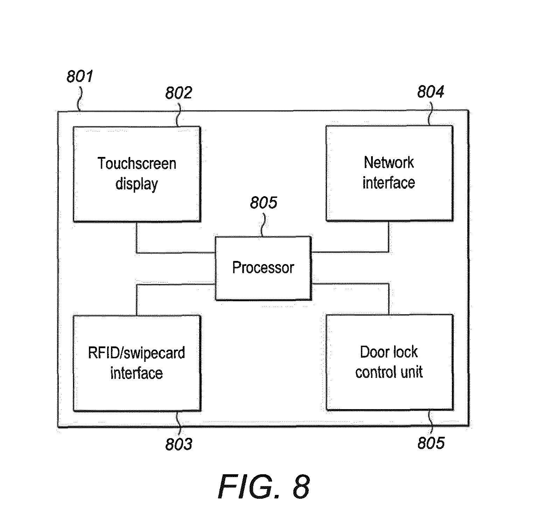

Figure 8 is a diagram showing an example of the functional units that may be contained within a local user device. The device 801 may be a lounge entrance/exit device, or a local user device for a meeting room door, such as doors 103, 105 or 107. The device 801 includes a user input interface in the form of a touch screen display 802, as well as a swipe card or RFID interface 803, although this is optional since the user may be able to input ID information using the touch screen display. A network interface 804 is provided for connecting the panel 801 to the remote server 205 and to database 206. The network interface may also be used to connect the panel to slave or master user devices as described below. The door lock control unit 805 connects electronically to the door lock mechanism of the associated door, such as the door to the lounge 102 or the door to room 1, 104. A processor, or central processing unit, is used to coordinate the activities of the various functional components, executing appropriate software to do so. The device may also include local storage in the form of a hard drive, as well as operating memory or RAM, which are not shown.

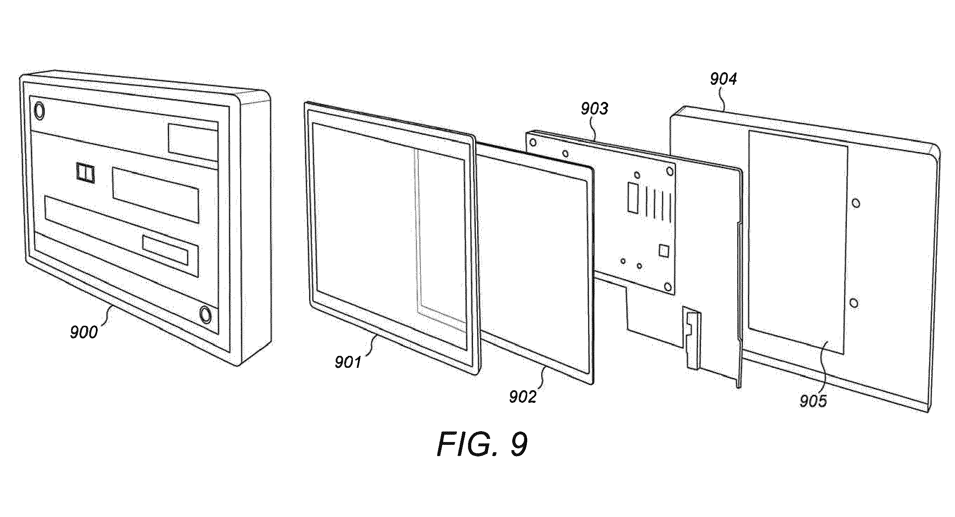

Figure 9 shows an image of an example local user device 900, along with the modules that make up the device. The modules include a front or cover portion 901, which may optionally include an integrated touch screen. A display unit 902 is provided, which may be a touch screen display, where a touch screen is not integrated with the front portion 901. A base panel 903 is provided to house the electronic components, and a back panel 904 is provided to seal the device 900 and to allow the device to be mounted on to a wall. The back panel 904 includes a hole or opening 905 through which cables can be passed such that the unit can sit flush against a wall with cables passing into the wall, including power, network and door lock connection cables.

Preferably, a device is mounted adjacent to the door to which it provides access control. The panels are optionally mounted approximately 145cm from the ground to the bottom of the device to provide easy user access at a comfortable height.

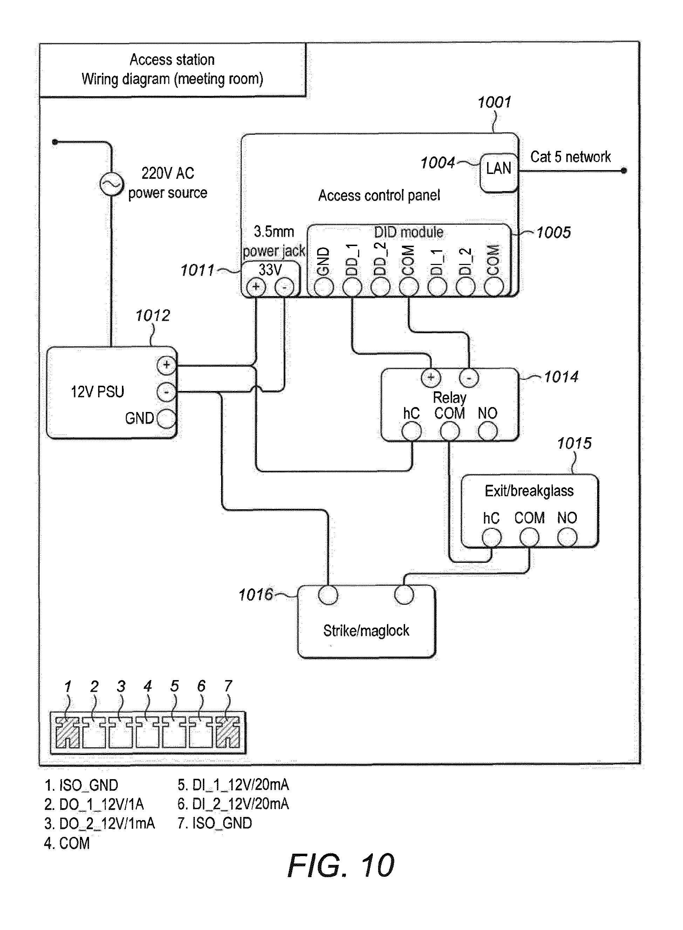

Figure 10 shows an example wiring diagram for a meeting room device such as devices 109. The diagram shows a device 1001 having a network interface 1004, a power supply connection 1011, which can be coupled to a power supply unit 1012 and a door lock control unit 1005. The door lock control unit 1005 is coupled to a relay unit 1014, which is also coupled to power supply unit 1012 (or to a different power supply unit). The relay unit is connected to a fail safe unit 1015 and to a door lock mechanism 1016.

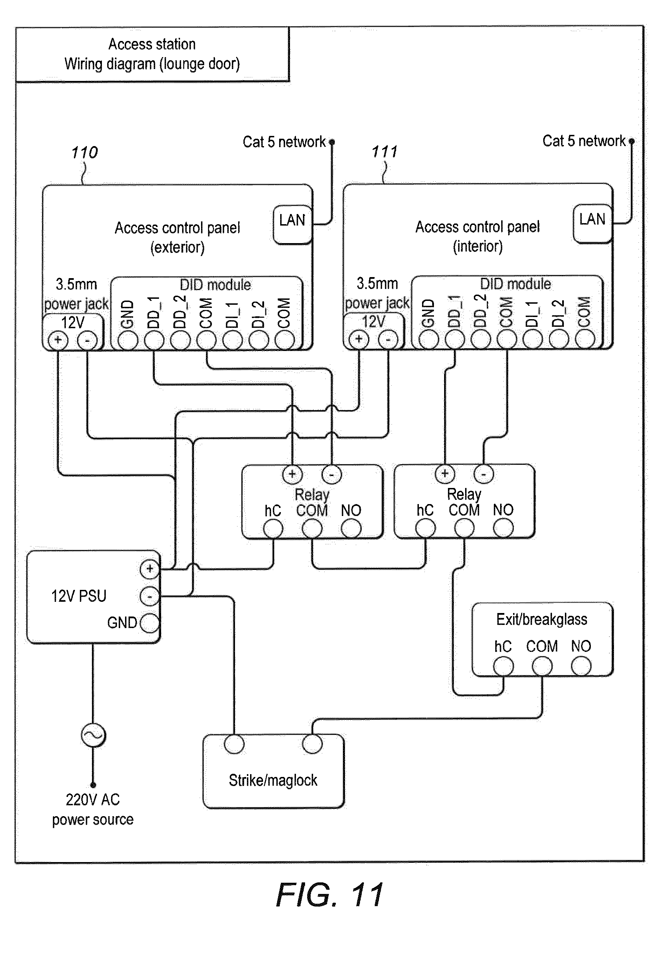

Figure 11 shows a similar example wiring arrangement for the lounge door panels 110 and 111, which are given like references to those in Figure 10. The panels share the same components as described in Figure 10, and will not be described again for brevity.

Referring back to Figure 1, it will be appreciated that there may be multiple devices 109 providing access to rooms. In addition, there may be different types of devices, including entrance devices 110 and exit devices 111. There may be no interaction between the devices, and for each device a logically separate database storing booking details may be maintained. Alternatively, a single database may be used but each room may still have its own distinct set of entries. In this way, the system is kept simple and scalable, whereby new rooms can be easily added.

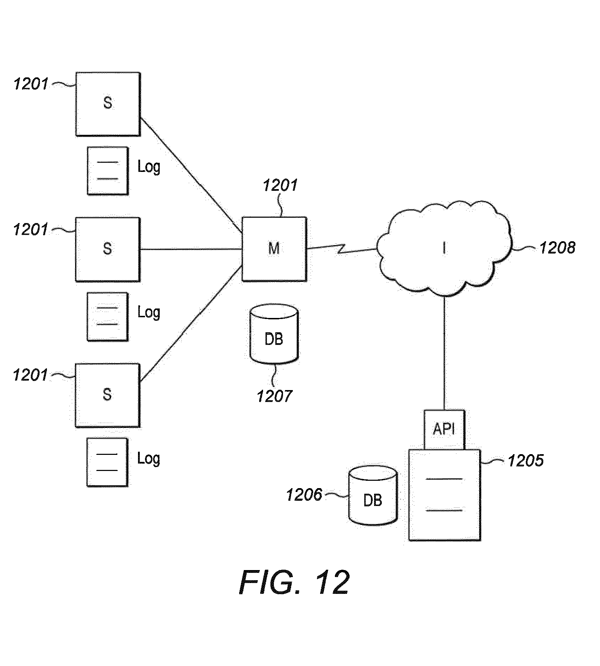

Figure 12 shows an example embodiment of a system. A plurality of local user devices 1201 are provided, each of which may be the same as those described above. Also provided, as described above, is a remote server 1205 which maintains a database 1206 in the same manner as described in relation to Figure 2 for example. The remote server 1205 may be accessed via the internet 1208 through an API.

One of the local user devices is designated as a "master" device, M, whereas the other local user devices are designated as "slave" devices , S. Whilst the master and slave devices may use the same hardware, such as that described in relation to Figure 8 and/or 9, they may be configured or programmed to perform different tasks. The master device includes a cache 1207 or local version of the database 1206 which stores a consolidated database containing information and booking details for the rooms associated with each of the slave devices. The local database 1207 is updated from the remote database 1206, but contains the information relevant only to the rooms local to the master device. The local master device database 1207 may be periodically updated from the remote server database 1206, or this may be performed in real time, and push and/or pull methods may be used. The local master device provides for an offline capability, whereby the system can continue to function using local data if the connection with the remote database is lost. In addition, a local master device allows a reduction in the amount of global traffic sent to/from the remote server. The slave devices may communicate with the master device via a local network. The master device may communicate with the remote server via the internet. The slave devices may also be configured to communicate directly with the remote server 1205 over the internet, rather than via the master device, for certain processes including sending booking information. The slave devices may store no data related to room bookings, and instead obtain this data from the master panel or directly from the database maintained at the local server. The slave devices may, however, maintain a log of interactions that they have performed.

The slave devices are each associated with a particular room, such as devices 109 in Figure 1. The master device is preferably configured to also carry out the processes of a lounge entrance device, such as device 110 in Figure 1, although it could instead be associated with a particular room and configured to also carry out the processes of a device 109 in Figure 1, or simply configured to carry out the functionality of a master device without additional functionality.

Bookings from a local panel 1201, or from a remote user device, may be exclusively made directly via the API of the remote server 1205 so as to directly update the remote database with new booking information. In this manner, if the remote server is offline for any reason, a booking (or an extension to a booking) cannot be processed. This can help to minimise the risk of booking overlaps, as all bookings are made directly to a central database. Bookings may also be paid for at the time of creating the booking, the payments of which may be processed by the remote server system rather than being processed locally.

Different examples of the steps carried out by the system will now be described in relation to an arrangement of the sort shown in Figure 1. It will be appreciated that where the location set-up or arrangement is different (for example, no lounge area may be provided) certain steps and procedures may not be required, or may be merged into a single procedure.

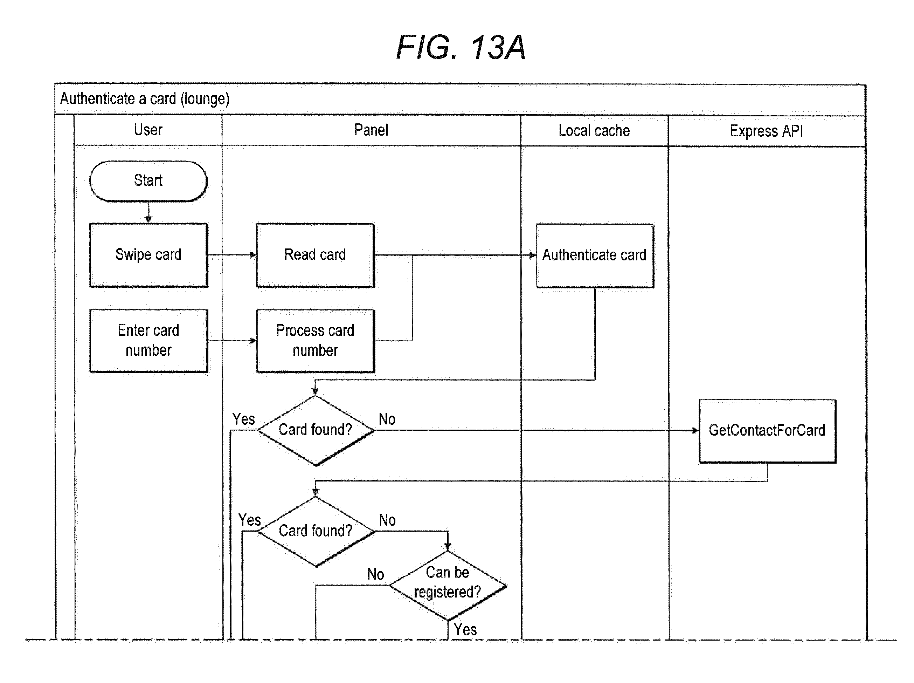

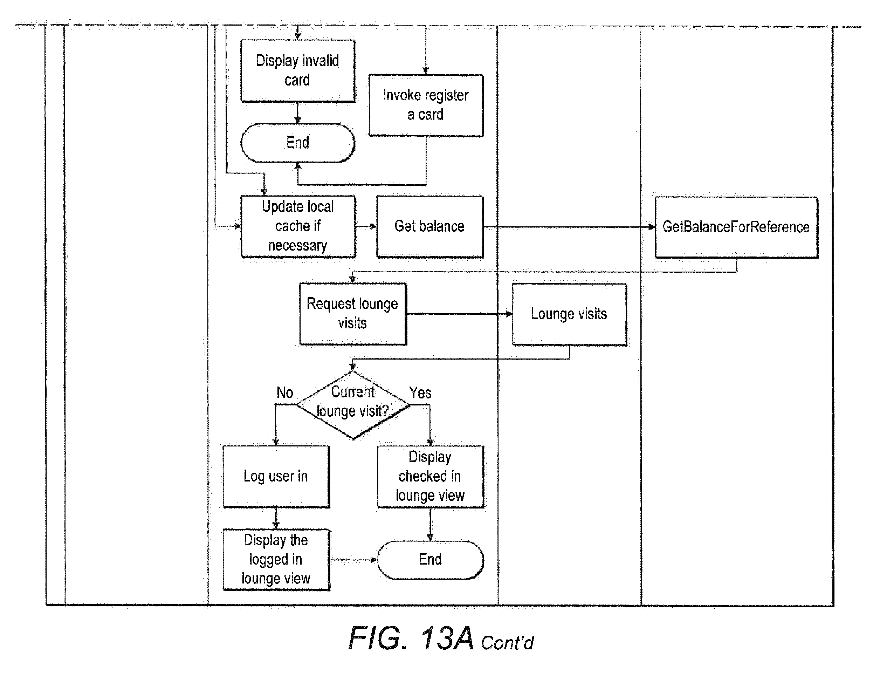

Figure 13A shows an example method to be executed by a system such as that shown in Figure 12 when a user desires to enter a lounge, the "panel" being a slave or master device, the "cache" being the local database 1207 associated with the master device and the "express API" being an interface for requesting data from the remote database 1206 associated with the remote server. The user provides identification data at the local device, such as by using their RFID card or entering a card number, to login on the lounge panel to gain access to the lounge. The lounge panel reads the card data and sends a request to the local cache to authenticate the card. The local cache replies that it has found the card. The lounge panel optionally sends a request to the Express API to obtain the card balance information. The Express API returns the card balance information. The panel may then look in the local cache for a current lounge visit for the card. If the local cache does not show a current lounge visit then the panel logs the user in to the lounge on the system, and the panel may display that the card is logged in as well as the balance associated with the card.

If the user ID, such as the card number read by the RFID reader, is not found in the local cache then the panel may send a request to the Express API to determine if the card exists in the Global cache (the remote database 1206). If the user is registered then the Express API replies that the card was found and the panel updates the local cache with the contact/card information.

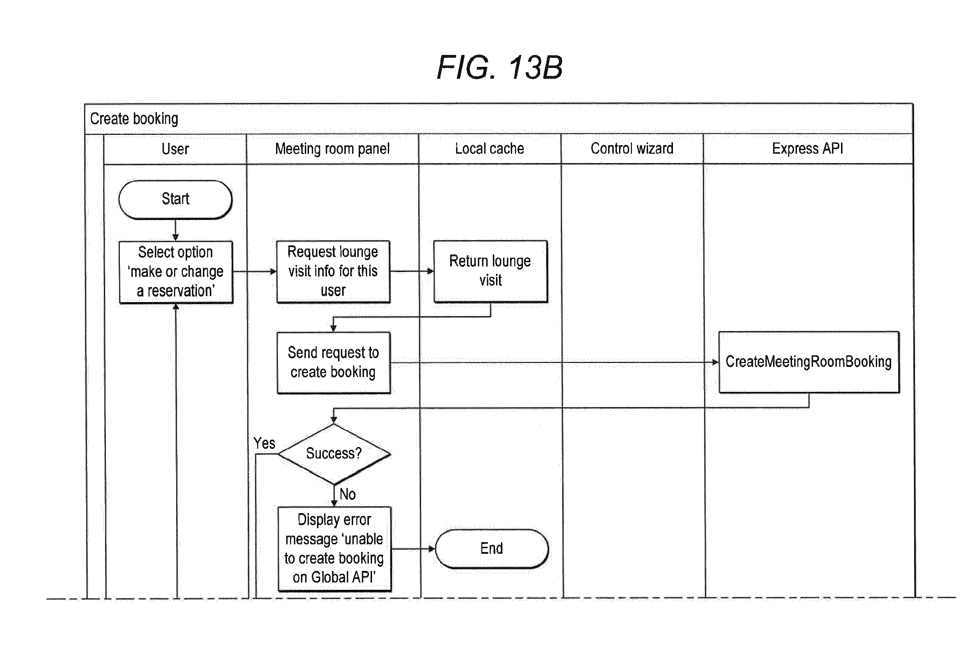

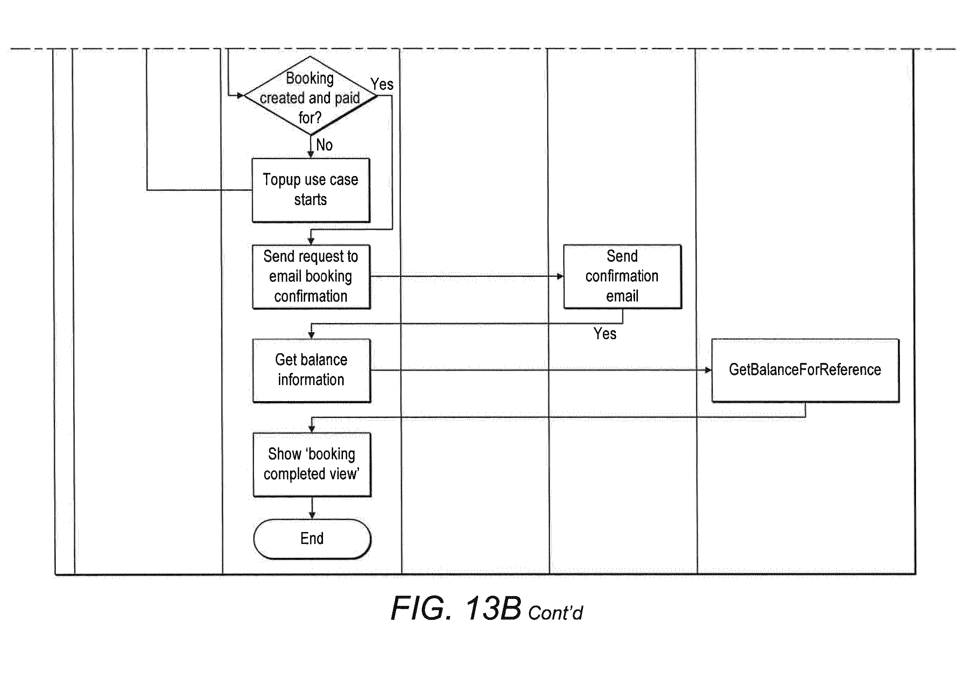

Figure 13B shows an example of the process involved to book a room using a slave device. The slave device is presented by the "meeting room panel", with the "local cache" being the database associated with the master panel and the "Express API" being an interface with the remote server and associated remote database. The user may first need to log in to the system at the slave device. The user is then able to select the option to book a room, or make an alteration to an existing booking, using the slave device. The slave device displays a booking view indicating dates and timeslots available for booking, the data being obtained from the master device's local database, and receives input from the user selecting the desired timing for a booking. The slave device may optionally query the local database of the master device to determine if the user has checked into an associated lounge area. The slave device then sends a request to the remote server to create the booking, and this is created by updating the remote database associated with the remote server with the room ID, the user ID and the booking time. Optionally, a check can be performed to determine if the booking has been paid for and to implement a top up of the user's credit associated with their account. A confirmation of the booking can be displayed on the slave device, and may optionally also be communicated to the user via a message such as an email sent over the internet. Furthermore, the slave device may optionally retrieve updated user balance information from the remote server to display this to the user.

To access a booked room the user approaches a slave panel and swipes their card or provides other ID information such as a card number. This causes the slave panel to query if there is a booking for a given timeslot associated with a given user. The query is sent to the master panel, although it may instead be sent to the remote server 1205 as described above. The master panel, or the remote server, returns the requested information, which may include details of the current or next booked slot and the ID of the user associated with the slot. A comparison is performed as to whether the booking is associated with the user who swiped their card, and whether that user should be allowed into the room. This comparison may take place at the slave panel based on data obtained from the master panel or remote server.

The master panel is configured to authenticate users to confirm that they are registered with the remote server 1205 by virtue of being contained in the database 1206. If the master panel is unable to authenticate the user, for example because the user is recently registered and the master panel database has not yet been updated to include details on the user, then the slave panel is configured to communicate directly with the remote server 1205 to authenticate the user using data from database 1206. Direct communication between the slave devices and the remote server may optionally be used for other instances, particularly when the data being requested by the slave device can fluctuate over small time scales. An example of this type of data is a user's account balance, where the user is booking a room using the slave device, or extending a booking and the system needs to determine if they have sufficient funds associated with their account to do so.

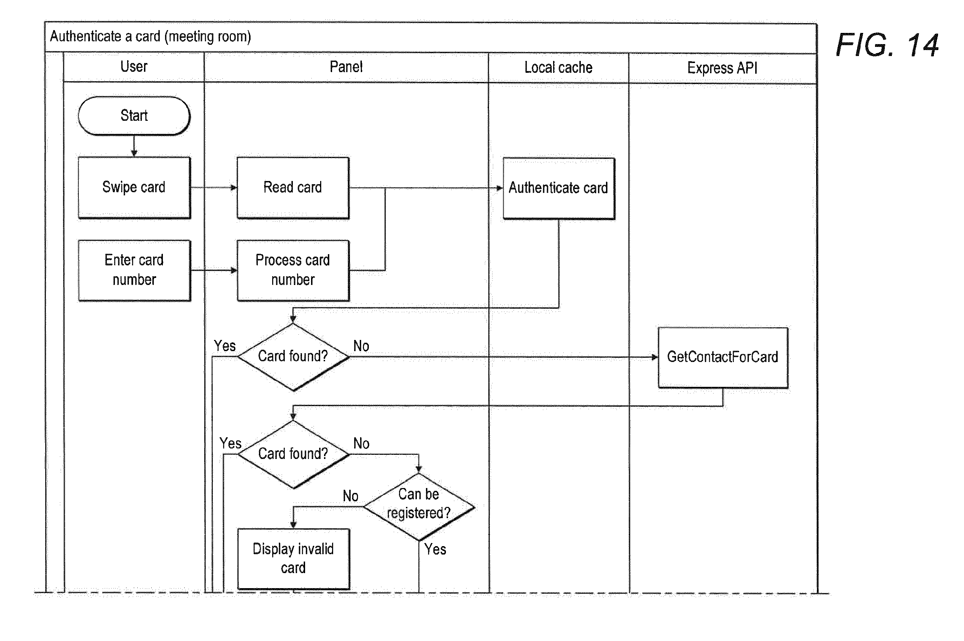

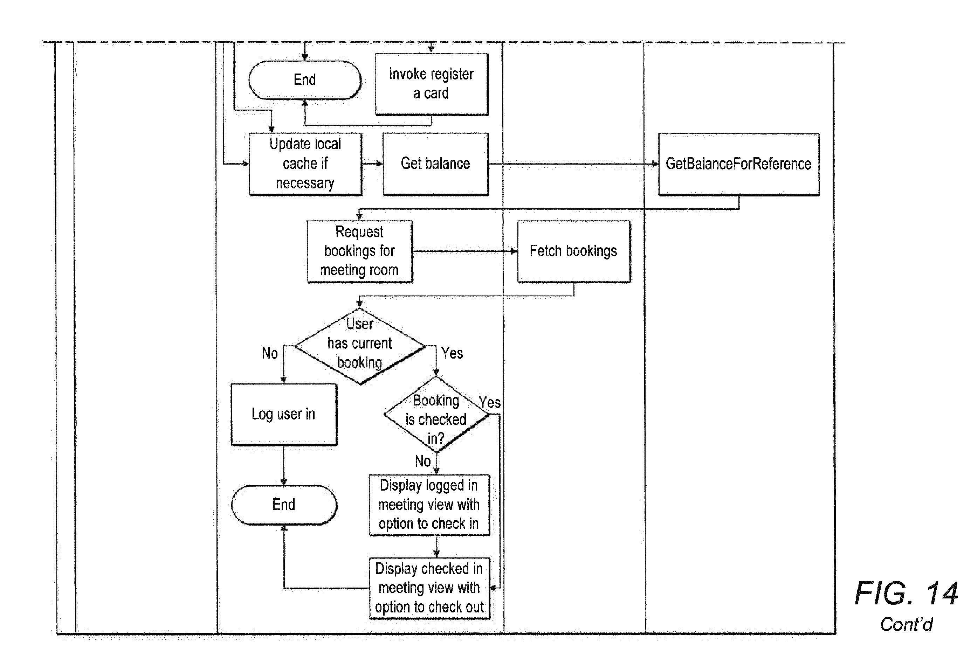

Figure 14 shows an example method to be executed by a system such as that shown in Figure 12 when a user desires to enter a meeting room, such as rooms 103, 105 or 107, but has not yet logged into the system. The "panel" in this example is a slave device, the "cache" the local database 1207 associated with the master device and the "express API" an interface for requesting data from the remote database 1206 associated with the remote server. The user provides identification data at the local device, such as by using their RFID card or entering a card number and the meeting room panel sends a request to the local cache to authenticate the card number or user ID. Typically the local cache will reply to indicate that the card number has been found, and the meeting room panel may send a request to the express API to obtain the balance associated with that card. The meeting room panel looks to the local cache to determine whether the user associated with the card has a current booking with the room. In the event that the local cache indicates that there is no current booking the user is logged in to the system and given the option to create a booking. In the event that the user has a current booking for that room, the user will be presented, on the panel, with the option to check in to the meeting room. Alternatively, if there is a current booking associated with that user for which the user has already checked in, the panel may present the user with the option to check out, as well as presenting their balance information.

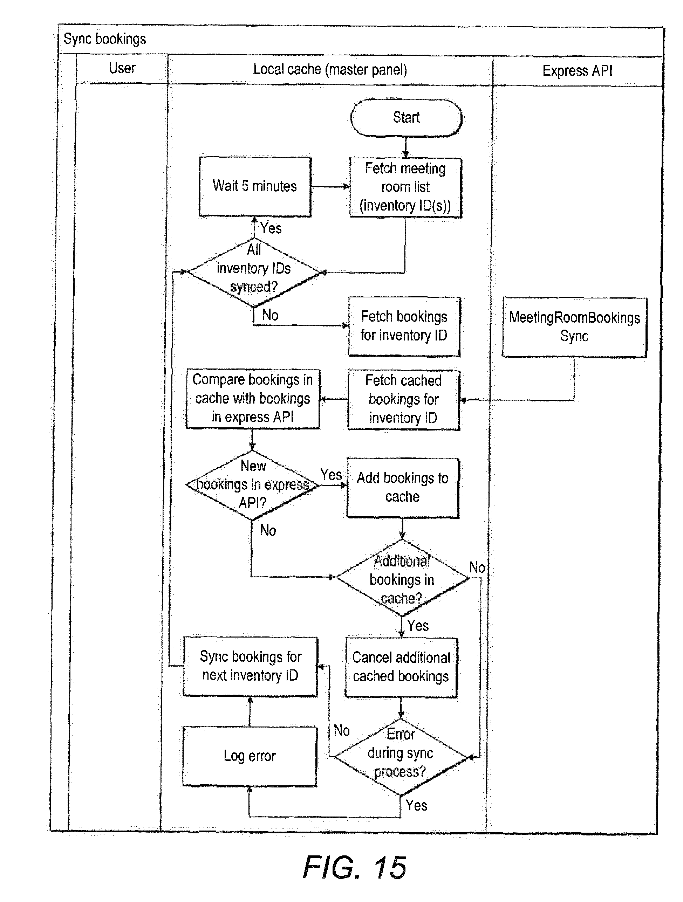

Figure 15 shows an example method to be executed by a master panel, such as that shown in Figure 12, in order to synchronise the local database 1207 with the remote database 1206. The master panel initially requests a list of all the meeting rooms (inventory IDs) it services from the local cache, which may be maintained in a local list in the form or a table or directory for example. This relates to those meeting rooms for which there is associated a slave panel or slave device. The local cache returns a list of the meeting rooms associated with the master panel and their associated inventory data, including booking times and users associated with those booking times. The master panel then sends a request to the express API to obtain a list of bookings for each of the meeting rooms with which it is associated. The master panel, in receipt of booking information for each of the associated meeting rooms returned from both the local cache and the global cache via the express API compares the two sets of data and identifies the differences. The local cache is then updated with each new booking that exists in the express API data, but not in the local cache data. Optionally, all bookings in the local cache that do not exist in the express API data are marked as "cancelled" in the local cache, or are deleted. The synchronisation process can be repeated at predetermined intervals, for example, every five minutes.

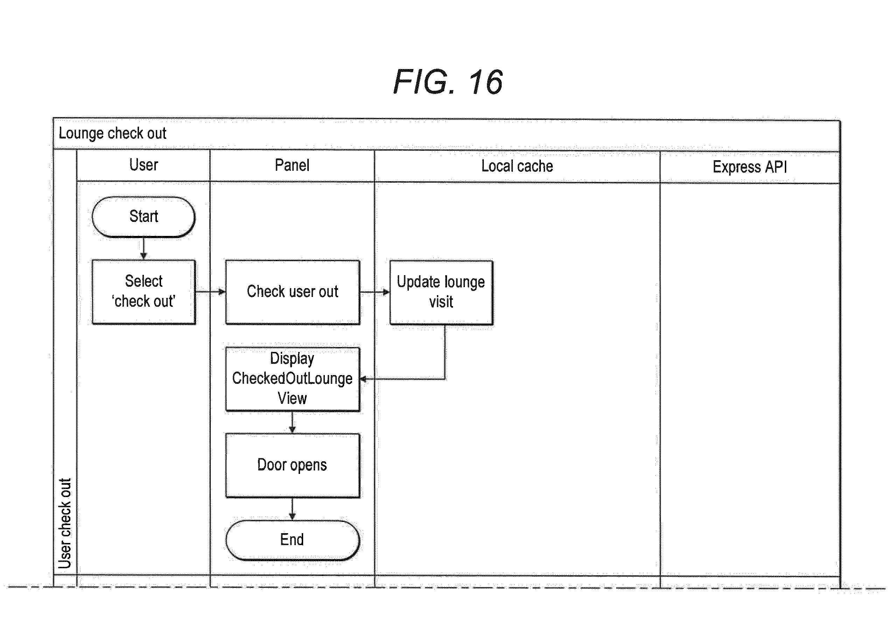

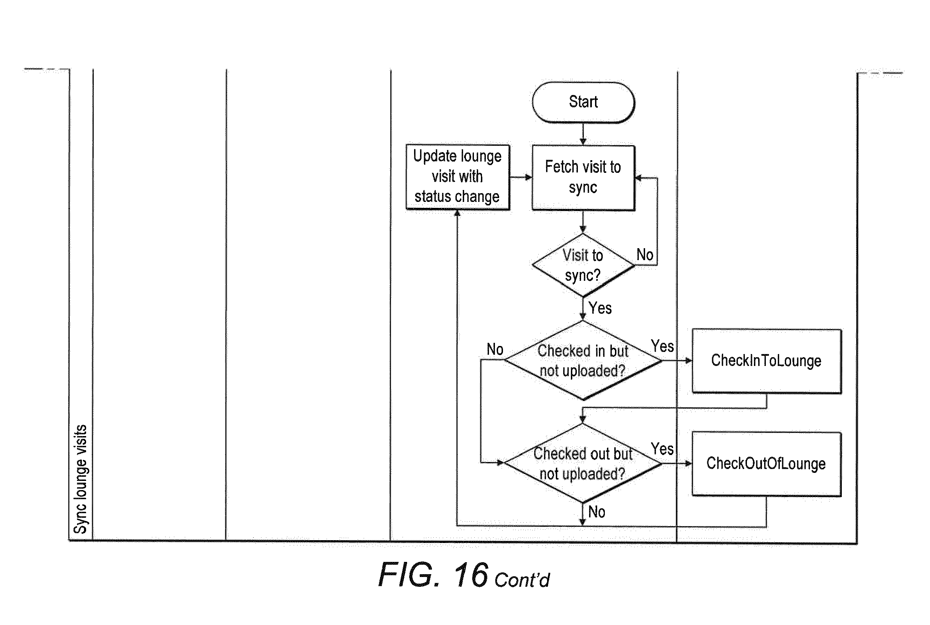

In some embodiments it may be necessary to update the global or remote database from information updated at the local cache or database. Figure 16 shows such an example in relation to checking a user out of the lounge area, although the example may well equally apply to checking a user out of a meeting room. The user is initially logged in to the lounge, and approaches the lounge exit panel and selects the option to check out of the lounge. The user can then exit and the system can update to reflect the user has checked out. Subsequently, or concurrently, the master panel hosting the local cache performs a check to determine if any updates to the local cache indicating that a user has checked in or out locally, have also been updated in the remote database 1206. For example, the check may reveal that the local cache indicates that there is a lounge visit that has been checked out, but the express API has not been informed of the check out. Where a discrepancy exists, the master panel / local cache submits an appropriate request to the express API to update the remote database, and updates an entry in the database to indicate that the local cache has been appropriately synced with the remote database. This may be equally applicable where a user has been checked in, but the remote database has not been informed of the check in. This process can be enacted periodically with predetermined times between the process running, such as five minutes. As with all examples and embodiments described herein, the remote server can use the information updated to the database 1206 to debit the appropriate charges for the services rendered, such as access to the lounge or to the meeting rooms, by also storing data indicative of a given user's account balance.

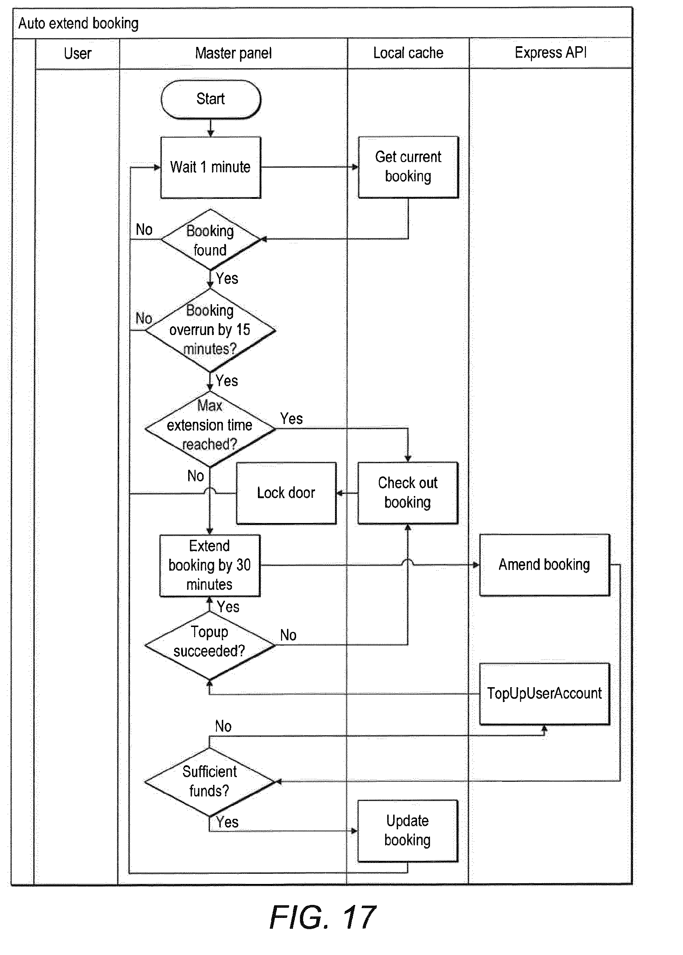

Figure 17 shows a flow diagram illustrating the process of Figure 4 in further detail, showing the components of the system that may undertake certain actions or decisions. The automatic extension of bookings may be scheduled to run periodically and in this example are shown running on a master device, but may be implemented using a slave device querying the database associated with the master device. When the device determines that it is time to execute the auto extend process, the device looks to the local cache to determine if there is a current booking associated with the room, or slave panel, in question. The local cache returns the current booking and the device determines whether the booking should be automatically extended or not. If the booking has not yet overrun by a predetermined amount, such as fifteen minutes, then no further action may be taken until the auto extend process runs at a later time. If the predetermined amount of time has been exceeded then the device determines that the booking should be automatically extended, which results in the device sending an "amend booking" request to the express API. The express API, in communication with the device or otherwise, will determine whether the user has sufficient funds associated with their account to cover the cost of extending the booking by a predetermined amount of time (e.g., thirty minutes). If so, then the booking is updated either at the local cache, the remote database associated with the express API, or both. If sufficient funds are not available then a process may be implemented to top up the funds on the user account, either automatically or by prompting the user at the local device. The process may continue until the user has reached a maximum extension time of, for example, two hours. When the maximum extended time has been reached the user may be automatically checked out, this being marked in the database of the local cache, and the meeting room door may be automatically locked such that the user cannot return once they leave. The same may apply when the user no longer has sufficient funds to cover further extensions of time.

The system may be capable of dynamically updating the floor-plan associated with a given master device at the local cache/database as will now be described. As mentioned above, the master device maintains a local database containing the booking details and associated user details for a particular location. In particular, the master device maintains a local database for each of the slave devices in communication with the master device over the local network or networks, each of the slave devices being associated with a particular room to which users will require access. Each slave device may have an identifier or inventory ID associated with it and the master device uses this ID, upon receipt from the slave device, to update booking details for a given room by obtaining booking information from the remote database. The remote database is maintained on a per-slave device basis, meaning that the remote database associates booking information with a set of unique identifiers each associated with a particular slave device, but may not contain information as to the physical locations of the slave devices or the master devices with which they are associated. The master device stores a list of all the slave devices associated with it (i.e. those slave devices located at the building or location) and therefore maintains a virtual floor-plan identifying each of the rooms associated with the master device via the slave devices and the booking and user information associated with each of those rooms. This allows the master device to only request information from the remote database for those slave devices associated with it, rather than requesting all data from the remote database. Dynamically updating this virtual floor-plan allows the easy expansion of a given location to include additional rooms and associated slave devices without requiring a complicated set-up procedure and without needing to manually update the master device to accommodate the new room, whilst still reducing the amount of data to be sent to the master device from the remote server.

When a new room is added to the system it is associated with a new slave device which has a unique inventory ID. This slave device, and the associated room, is unknown to the master device. As discussed above, room bookings may be made directly at the slave devices, or optionally also via a remote user device, with the booking being made by exchanging data between the slave device, or remote device, and the remote server that maintains the central database. The master device may therefore not be aware of the new slave device even though bookings have been made to use the room associated with it.

When a user attempts to check into the new room the new slave device reverts to the master device, and the associated local database, to determine if there is a booking associated with that user for the new room. The request from the slave device may include the inventory ID for the slave device. If the room/panel is new then the master will have no record of the slave device ID, or of any bookings for the associated room, since it would not have previously requested this from the remote database as the room/panel would not be in the master's list of associated devices. In such a circumstance the master device is configured to query the remote database via the remote server/API. The remote server will be up-to-date as bookings are made directly between the slave devices and the remote server. The master device receives information from the remote database associated with the remote server including the user details, booking details and the inventory ID for the slave device, and determines that the slave device does not feature on the list it maintains. In response, the master device adds the new inventory ID to the virtual floor-plan. In this way, the master will subsequently include the new slave device when requesting data from the remote database. This scheme allows easy scalability whilst maintaining a local cache/database for reduced global traffic and offline functionality.

The above description has focused on applications in which meeting rooms are to be booked, those meeting rooms being connected to a lounge of some description. This is not a requirement of the invention, and embodiments may provide a single room with an access control scheme as described above. Embodiments may provide a free standing unit that contains resources that a worker might want to user when they are away from the office with a device located thereon for allowing the user to book and enter a unit.

Where references are made to databases it should be appreciated that one or more databases could be used, these databases being maintained at different servers. The databases may, therefore, be distributed.

Where reference has been made to the remote server system sending data to one or more other devices it should be appreciated that this may include the data being sent in response to a request from those devices. All, or at least some, of the data originating from the remote server system may therefore be considered to be requested from the remote server by the recipient device such as a master/slave panel or remote user device, rather than being sent by the remote server without prompting.

## Claims

1. A system for controlling user access to one or more rooms, the system comprising:
- one or more local user devices (109, 1201) mounted proximate to, and associated with, respective ones of a plurality of rooms (104, 106, 108) making up a local set of rooms, each local user device being electronically coupled to a lock mechanism of a door to the associated room;
- a remote server (1205) coupled to a first database (1206) that associates users with predetermined periods of time for each room in a global set of rooms, the local set of rooms being a subset of the global set of rooms;
- a local master device (1207) coupled to a second database (1207) that associates users with predetermined periods of time for each room in the local set of rooms, the local master device being configured to communicate with the remote server to update the second database from the first database;
each local user device being configured to:
- in response to user input, communicate with the local master device to determine, using the second database, that the associated room is scheduled for use by a user; and
- unlock the door to the associated room based on the determination;
each local user device being further configured to:
- receive a selection from a local user to select an available period of time to use the associated room; and
- communicate with the remote server to associate, in the first database, the local user with the predetermined period of time based on the selection.

2. A system according to claim 1 wherein:
- each of the local user devices are configured to send identification data to the local master device and to the remote server; and
- the local master device is configured to:
- maintain a list of data identifying each of the local user devices.

3. A system according to claim 2 wherein the local master device is configured to:
- determine whether the identification data of a given local device with which it is communicating corresponds to an entry in the list of data;
- wherein if the identification of the given local device with which it is communicating does not correspond to an entry in the list of data the local master device is further configured to query the first database to determine that the associated room is scheduled for use by that user.

4. A system according to claim 3 wherein if the first database indicates that the associated room is scheduled for use by that user, the local master device is further configured to:
- update the list of data identifying each of the local user devices to include an entry for the given local user device.

5. A system according to any of claims 2 to 4 wherein the local master device is configured to update the second database from the first database by requesting data for local user devices identified in the list of data maintained by the local master device.

6. A system according to any preceding claim wherein the remote server is further configured to:
- send data, via a network, to a remote client device, the data indicating available periods of time during which rooms in the global set of rooms are available for use;
- receive from the remote client device, via a network, a selection from a remote user to schedule an available period of time to use a room in the local set of rooms; and
- associate, in the first database, the remote user with a predetermined period of time for the room in the local set of rooms based on the selection.

7. A system according to any preceding claim further configured to:
- determine, in response to user input provided to the local device, when a user has finished using a local room;
- lock the door to the room based on the determination; and
- update the first and/or second database to indicate that the user has finished using the room.

8. A system according to claim 7 further configured to:
- compare the time at which user input is provided to the local user device with the start time at which the room is scheduled for use;
- determine that the user input has been provided within a predetermined period of time prior to the start time at which the room is scheduled for use;
- determine whether the room is currently scheduled for use by another user; and
- where the room is currently not scheduled for use by another user, unlock the door to the room.

9. A system according to claim 8 wherein where the room is currently scheduled for use by another user, the system is further configured to determine whether that user has finished using the room by querying the first or second database and, if so, unlocking the door to the room.

10. A system according to claim 7 further configured to:
- compare the time at which the user input is provided to the local user device with the time during which the room is scheduled for use;
- determine that the user input has been provided within the time during which the room is scheduled for use;
- determine whether a previous user has finished using the room by querying the first or second database; and
- where the previous user has finished using the room, unlock the door to the room.

11. A system according to claim 10 wherein, where the previous user has not finished using the room, the system is further configured to:
- unlock the door to the room; and
- automatically update the database to indicate that the previous user has finished using the room.

12. A method for controlling user access to one or more rooms, the method comprising:
- receiving user input at a local user device, being one of a plurality of local user devices each mounted proximate to, and associated with, a respective room from a plurality of rooms making up a local set of rooms, each local user device being electronically coupled to a lock mechanism of a door to the associated room;
- sending a request from the local user device to a local master device based on the user input to determine, using a local database, that the associated room is scheduled for use by a user; and
- unlocking the door to the associated room based on the determination;
the method further comprising:
- receiving, at the local user device, a selection from a local user to select an available period of time to use the associated room; and
- sending data from the local user device to a remote server to associate, in a remote database, the local user with the predetermined period of time based on the selection;
- wherein the local master device is configured to communicate with the remote server to update the local database from the remote database.

13. A local user device mounted proximate to, and associated with, a room being one of a local set of rooms, the local user device being electronically coupled to a lock mechanism of a door to the associated room and the local user device being configured to:
- communicate with a remote server coupled to a first database that associates users with predetermined periods of time for each room in a global set of rooms, the local set of rooms being a subset of the global set of rooms;
- communicate with a local master device coupled to a second database that associates users with predetermined periods of time for each room in the local set of rooms, the local master device being configured to communicate with the remote server to update the second database from the first database;
- in response to user input, communicate with the local master device to determine, using the second database, that the associated room is scheduled for use by a user; and
- unlock the door to the associated room based on the determination;
the local user device being further configured to:
- receive a selection from a local user to select an available period of time to use the associated room; and
- communicate with the remote server to associate, in the first database, the local user with the predetermined period of time based on the selection.

14. A local master device coupled to a local database that associates users with predetermined periods of time for each room in a local set of rooms, the local master device being configured to:
- receive a request from a local user device to determine, using the local database, that a room associated with the local user device is scheduled for use by a user and send the result of the determination to the local user device to unlock a door to the associated room based on the determination; and
- communicate with a remote server to update the local database from a remote database that associates users with predetermined periods of time for each room in a global set of rooms, the local set of rooms being a subset of the global set of rooms;
wherein the remote database is updated to associate users with predetermined periods of time by receiving data from the local user device based on a selection from a local user to select an available period of time to use the room associated with the local user device.

15. A remote server coupled to a remote database that associates users with predetermined periods of time for each room in a global set of rooms, the remote server being configured to:
- receive requests from respective local master devices to update a local database, the local database associating users with predetermined periods of time for each room in a local set of rooms local to the respective local master device, and send data to the local master device in response to the requests;
- receive data from local user devices, each associated with a respective room in a local set of rooms, based on a selection from a local user to select an available period of time to use the room associated with the local user device, and updating the remote database in response.
